# EUROPEAN PATENT APPLICATION

(11) **EP 4 574 323 A2**
(43) Date of publication of application: **25.06.2025**
(21) Application number: 24222733.8
(22) Date of filing: 23.12.2024
(51) Int. Cl.: B23K 11/00, B23K 11/06, B23K 31/02, B21C 37/08, B21C 37/28

(54) **METHOD AND DEVICE FOR RESISTANCE WELDING OF A PIPE BEND FITTING**

(30) Priority: 22.12.2023 BE 202306050; 22.12.2023 BE 202306051
(71) Applicant: Vento NV, 9700 Oudenaarde (BE)
(72) Inventor: DE DONCKER, Bart, 9700 Oudenaarde (BE); MODDE, Bart, 9700 Oudenaarde (BE)
(74) Representative: Brantsandpatents bv

(57) **Abstract**

The present invention relates to a method for resistance welding of a pipe bend fitting, in which two pipe bend fitting halves are welded together to form one pipe bend fitting using a resistance welding machine, wherein both an internal weld and an external weld occur in three welding phases. The invention also relates to a device, wherein at least two synchronously moving robots position the two pipe bend fitting halves. The resistance welding machine includes a welding section for resistance welding of the fittings, while a control section maintains communication with the synchronously moving robots. The welding current, welding time, and cooling time can be adjusted per welding phase. This leads to increased productivity through simultaneous resistance welding of fittings, and improved weld reliability and durability through triple welding phases.

## Description

### TECHNICAL FIELD

The invention relates to a method for resistance welding of a pipe bend fitting.

The invention also relates, in a second aspect, to a device for producing a welded pipe bend fitting.

In another aspect, the invention also relates to a use for manufacturing a pipe bend fitting.

### PRIOR ART

Resistance welding is an established technique for joining tubular elements and forming bends and joints in traditional pipe and tube manufacturing. Despite the widespread acceptance and application of resistance welding, this method has some inherent limitations that can negatively affect the quality and efficiency of the welding process. A major challenge within this technique lies in the positioning of workpieces, where manual or conventional alignment methods are time-consuming and error-prone. However, accurate positioning is essential for a successful weld joint, as deviations directly affect the quality of the weld.

Moreover, existing resistance welding machines exhibit inaccurate control of welding parameters, resulting in weld sparks, wire breaks, and reduced quality at the start of the weld joint. This variability in weld seams is further exacerbated by the reliance on the skill of the welder or the machine used. Incorrect welds can not only reduce the quality of the joint but also lead to deformations of tubular elements, with negative consequences for the fit and functionality of the final product.

A specific application area of resistance welding is the production of segmented bends for ventilation systems, which are crucial for an optimal air transport infrastructure. Traditionally, these segmented bends are welded and formed manually, a labor-intensive and time-consuming process that is sensitive to quality variations due to human factors. This hampers production speed and results in inconsistencies in the produced parts. Known semi-automatic systems exhibit deficiencies in terms of efficiency, flexibility, and precision, as they do not offer full automation and adaptability, leading to suboptimal production quality and increased material waste.

Additionally, existing welding machines for manufacturing segmented bends face difficulties in handling the diversity of pipe diameters and lengths. The limited adaptability of these machines results in inefficiencies and reduced flexibility in the production process. These shortcomings highlight the need for improvements in production methods for segmented bends and resistance welding in general.

The present invention aims to find a solution to at least some of the above-mentioned problems or disadvantages. The objective of the invention is to provide a method that overcomes these disadvantages by improving the accuracy of positioning, automating the welding process, and increasing the flexibility of the welding machines for different pipe sizes and shapes.

### SUMMARY OF THE INVENTION

In a first aspect, the present invention relates to a method according to claim 1. Prefer embodiments of the method are shown in claims 2 to 10.

The method involves the resistance welding of pipe bend fittings, wherein two pipe bend fitting halves are welded to form one pipe bend fitting. The advantages include a standardized shape for efficient welding, use of synchronously moving robots for precise positioning, and optimal overlap for quality welding results. The method includes laying of an internal weld according to three welding phases and laying of an external weld according to three welding phases.

A goal of the method is laying a strong weld joint between two pipe bend fitting halves.

A goal of the method is to produce pipe bend fittings with varying diameters and angles.

A goal of the method is the precise positioning of the two pipe bend fitting halves for laying a weld joint.

A goal of the method is to optimize the welding parameters at various moments during the welding process.

A goal of the method is to ensure airtightness of the formed pipe bend fitting.

A goal of the method is to avoid deformations of the pipe bend fitting.

A goal of the method is to avoid weld sparks.

In a second aspect, the present invention relates to a device according to claim 11. Preferred embodiments of the device are described in the dependent claims 12 to 14.

The device aims to weld two pipe bend fitting halves together into a welded pipe bend fitting using the seam welding principle and synchronously moving robots.

The device aims to achieve precise positioning of the pipe bend fitting halves, which is crucial for a uniform and high-quality weld joint.

A further purpose of the device is to weld different diameters of pipe bend fittings.

In a third aspect, the present invention relates to a use according to claim 15. The use is particularly advantageous due to the ability to weld ventilation bends with various diameters and angles.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

The term "resistance welding," also known as electric resistance welding, refers to a welding technique where the heat required to join workpieces is generated by electrical resistance. In this process, the workpieces to be joined are clamped between two electrodes, and an electric current is passed through the workpieces. The resistance to the electric current generates heat, causing the materials to melt and then be welded together. This type of welding is often used for joining metals such as steel and aluminum. There are various types of resistance welding, including spot welding, seam welding, projection welding, resistance butt welding (upset welding), and flash-butt welding.

The term "seam welding" refers to a welding technique that belongs to the resistance welding family and uses two rotating wheels, also known as electrode wheels, to move the workpieces to be joined along a seam and join them under pressure and heat. This process is characterized by the continuous movement of the wheels, which apply pressure to the workpieces to be joined. At the same time, electrical energy is applied to create a weld joint.

The term "weld segment" should be understood as a segment of the weld seam that is formed during a specific welding phase in which welding is briefly performed before the process is interrupted. It is an elementary part of the total weld joint, consisting of successive weld segments that together form the complete weld seam. Each weld segment represents a discrete unit of welded material added during a particular welding phase.

The term "segmented bend" refers to all tubular constructions, a bend or fitting that is composed of separate parts or tubular elements. This bend can be designed to efficiently guide airflow in a ventilation duct, for example, to make bends around obstacles or to adjust the airflow direction.

The term "rubber machine" in the present invention refers to any type of machine designed and built to apply a sealing rubber to a bend, tubular element, segment, or segmented bend.

In a first aspect, the invention relates to a method for resistance welding of a pipe bend fitting, wherein two pipe bend fitting halves are welded together to form one pipe bend fitting.

Preferably, each pipe bend fitting half has a form of the pipe bend fitting that is cut along a longitudinal axis, wherein a profile of the pipe bend fitting is semicircular, wherein each pipe bend fitting half has a long side and a short side, wherein the long side is suitable for forming an outer side of the pipe bend fitting and the short side is suitable for forming an inner side of the pipe bend fitting. Along the long side of each pipe bend fitting half, the external weld will be laid, while the internal weld will be applied along the short side. The fact that each pipe bend fitting half has a shape that is cut along a longitudinal axis and has a semicircular profile offers a standardized and efficient shape for welding. This allows for consistent welding results, which is crucial for the overall quality of the welded bend.

The term "pipe bend fitting," "bend," "fitting," or "bend fitting" refers to a component in piping systems used to connect a pipe or conduit and create a change in direction. Fittings are used to assemble, adjust, and extend pipes, and bend fittings specifically do this by introducing a bend in the piping system. Bend fittings are available in various designs and angles to meet different needs and installations. They can be, for example, elbows that create a 90-degree angle, or other degrees, depending on the specific application. Bend fittings can also be designed as bends with a gradual curve, which can be useful for smooth flow of fluids or gases through the piping system. Preferably, the pipe bend fitting is a pressed pipe bend fitting, thus each pipe bend fitting half is also a pressed pipe bend fitting half. The term "pressed" refers to a bend or bend half that is manufactured by bending or pressing a flat plate. However, the use of pressed bends will increase airflow resistance, which can affect the efficiency of the ventilation system.

In a first step, the method includes positioning two pipe bend fitting halves by means of at least two synchronously moving robots, wherein the short side and the long side of the two pipe bend fitting halves are positioned overlapping. Preferably, the method starts with positioning two pipe bend fitting halves by means of at least two synchronously moving robots. This results in a significant improvement of the positioning process. The robots move simultaneously and ensure quick and precise alignment of the workpieces. This eliminates the traditional challenges of manually or conventionally aligning workpieces, which is time-consuming and error-prone. By integrating synchronously moving robots, this method offers not only speed and precision but also consistency in the results. The ability to perform resistance welding quickly and correctly translates into accelerated production and increased productivity. It minimizes the chance of weld sparks, wire breaks, and inaccuracies in welding parameters that are typical of traditional resistance welding machines.

Preferably, the overlap is at least 0.2 mm and at most 10.0 mm, preferably at least 0.3 mm and at most 9.5 mm, more preferably at least 0.4 mm and at most 9.0 mm, even more preferably at least 0.5 mm and at most 8.5 mm, even more preferably at least 1.0 mm and at most 8.0 mm, even more preferably at least 1.2 mm and at most 7.5 mm, even more preferably at least 1.4 mm and at most 7.0 mm, even more preferably at least 1.6 mm and at most 6.5 mm, even more preferably at least 1.8 mm and at most 6.0 mm, even more preferably at least 2.0 mm and at most 5.5 mm, even more preferably at least 2.5 mm and at most 5.0 mm, even more preferably at least 3.0 mm and at most 4.5 mm, and even more preferably at least 3.5 mm and at most 4.0 mm. This optimal overlap contributes to various crucial aspects of the resistance welding process, resulting in a high-quality weld joint. The minimum overlap ensures that the materials to be joined are sufficiently bonded. This minimizes the chance of incomplete weld joints or weak points within the weld seam. By defining this optimal overlap, the risk of weld sparks is reduced. Too large an overlap will lead to excessive heat buildup, which can cause weld sparks. The mentioned optimal overlap allows the welding operator to distribute the heat evenly over the weld area, reducing the chance of deformation and other unwanted effects. An overlap smaller than the mentioned optimal overlap in resistance welding, especially in seam welding, will lead to insufficient bonding between the materials to be joined, resulting in weak weld joints and reduced structural integrity. This underestimated overlap can also increase the chance of weld sparks, which can have unwanted effects on the quality of the weld seam. On the other hand, an overlap larger than the mentioned optimal overlap will lead to excessive heat buildup, increasing the risk of deformation and negatively affecting the aesthetic and structural quality of the weld. A carefully maintained overlap within the specified range is therefore crucial for an optimal resistance welding process, achieving a balance between bonding, heat management, and dimensional precision.

In a next step, the method includes laying an internal weld along the short side of the two pipe bend fitting halves, wherein the internal weld includes at least three welding phases. A welding phase should be interpreted as a time period during which welding is performed. The use of at least three welding phases during the laying of the internal weld along the short side of the two pipe bend fitting halves offers the possibility to set specific welding parameters during the different phases of the welding process, which has a significant influence on the final quality of the weld joint. Each welding phase of the internal weld represents a specific moment in the welding process where the adjustment of parameters such as welding current, welding time, cooling time, and the ramp-up and ramp-down of the current allows for precise control. The use of at least three welding phases provides a differentiated approach to controlling heat distribution and minimizing potential defects.

Preferably, a first welding phase of the internal weld is 20-30%, preferably 21-29%, more preferably 22-28%, even more preferably 23-27%, even more preferably 24-26%, and in particular about 25% of a total welding time for laying the internal weld. In this initial phase, the foundation is laid for the internal weld, with the focus on the initial bonding process. This phase is crucial for establishing a stable foundation for the weld joint. This approach ensures a gradual heating of the material, preventing thermal shocks and minimizing potential deformation or stresses in the material. Moreover, limiting the duration of the initial welding phase provides the weld operator with the opportunity for precise control over crucial welding parameters, such as welding current, welding time, and cooling time. This allows for a differentiated approach to controlling heat distribution and minimizing potential defects. A too long initial welding phase will lead to overheating, with possible adverse effects on the quality of the weld joint, such as deformation. On the other hand, a too short initial welding phase will result in insufficient heating and preparation of the material, which can reduce the bonding between the materials to be joined.

Preferably, a second welding phase of the internal weld is 50-60%, preferably 51-59%, more preferably 52-58%, even more preferably 53-57%, even more preferably 54-56%, and in particular about 55% of the total welding time for laying the internal weld. This second phase is dedicated to further building and strengthening the internal weld. This choice aims for thorough fusion and deeper penetration of the weld into the material, contributing to improved bonding between the materials to be joined and resulting in a significant strengthening of the structural integrity of the weld seam. This welding time of the second welding phase also provides the opportunity for optimal control over heat management during this crucial part of the welding process. This is important to prevent defects such as incomplete weld joints or weak points within the weld seam. While a longer second welding phase will result in overheating and a shorter welding phase will lead to insufficient penetration and bonding, which can reduce the quality of the weld joint.

Preferably, a third welding phase of the internal weld is 20-30%, preferably 21-29%, more preferably 22-28%, even more preferably 23-27%, even more preferably 24-26%, and in particular about 25% of the total welding time for laying the internal weld. The third and final phase concludes the process, where preferably 20-30% of the total welding time is spent carefully completing the internal weld. This shorter interval is therefore focused on the final finishing, where precise control is exercised to ensure that the weld joint meets both structural and aesthetic standards. By adding this specific third welding phase, weld parameters such as cooling time and final adjustments to the welding current and other factors can be precisely optimized, contributing to control over the finish and quality of the weld seam. Also important is the minimization of possible defects, as the third welding phase offers the opportunity to perfect the weld joint. This phase helps prevent imperfections and weak points in the weld seam.

The differentiated approach to time allocation in each phase offers a strategic advantage in the resistance welding process, where careful attention is paid to optimizing bonding, strengthening the weld seam, and achieving a precise and high-quality finish. In summary, these phases offer a balanced approach to obtaining an internal weld of optimal quality. The internal weld in a pipe bend fitting is crucial due to its direct impact on structural integrity and sealing performance. A precisely laid internal weld not only promotes the reliability and durability of the fitting but also minimizes the chance of leaks.

In a final step, the method includes laying an external weld along the long side of the two pipe bend fitting halves using the same resistance welding machine, wherein the external weld comprises at least three welding phases, thereby obtaining a pipe bend fitting.

Preferably, a first welding phase of the external weld is 20-30%, preferably 21-29%, more preferably 22-28%, even more preferably 23-27%, even more preferably 24-26%, and in particular about 25% of a total welding time for laying the external weld. This approach is applied to start the external weld in a controlled and structured manner. Setting an initial welding phase helps establish the weld penetration and formation of the weld seam on the outside of the pipe bend fitting. By concentrating this phase at the beginning of the welding process, any startup issues can be addressed, and consistent quality of the external weld can be achieved. Moreover, this provides the opportunity to adjust the welding parameters and optimize the welding quality throughout the rest of the welding process.

Preferably, a second welding phase of the external weld is 50-60%, preferably 51-59%, more preferably 52-58%, even more preferably 53-57%, even more preferably 54-56%, and in particular about 55% of the total welding time for laying the external weld. By allocating a significant portion of the welding time to this phase, it ensures deeper and complete penetration of the weld seam, which is crucial for the structural integrity and strength of the weld. Additionally, the extended duration of the second phase provides the opportunity to optimize the welding parameters, including current strength and welding speed, resulting in improved control and weld management. Moreover, this approach contributes to controlling the heat impact on the material, which is beneficial to minimize unwanted effects such as deformation. Ultimately, this careful phasing of the weld provides the opportunity to obtain desired weld seam properties, tailored to the specific material and intended application.

Preferably, a third welding phase of the external weld is 20-30%, preferably 21-29%, more preferably 22-28%, even more preferably 23-27%, even more preferably 24-26%, and in particular about 25% of the total welding time for laying the external weld. This welding phase indicates the careful finishing and optimization of the welding process and is implemented to perfect the final details of the weld joint. In this, aspects such as weld penetration, weld shape, and overall quality can be refined. Through this careful approach, not only is the efficiency of the welding process increased, but post-processing is also minimized, and an aesthetically pleasing final weld is obtained. Essentially, the third welding phase provides the opportunity to optimize the weld parameters to the finest detail, thereby achieving a precise, durable, and high-quality external weld.

According to a further or alternative embodiment, the welding will take place on a resistance welding machine. Resistance welding is a fast process that does not require filler material or shielding gas, making it more efficient than other welding techniques. Due to the nature of resistance welding, post-processing is generally not required, saving time and costs. Since no filler material or shielding gas is needed, resistance welding produces no waste, smoke, or spatter, making it an environmentally friendly option.

Preferably, the resistance welding machine is of the seam welding type. Seam welding is a form of resistance welding where the weld seam is formed by the rotation of the electrodes, resulting in a continuous weld joint. This process is advantageous due to its accuracy and efficiency in forming weld joints, especially in materials from which the pipe bend fittings are made. First of all, seam welding is known for its efficiency and speed. The use of rolling electrodes allows for rapid joining of weld material, which benefits overall productivity. Additionally, the process guarantees uniformity in the weld seams. The rolling electrodes achieve even pressure and heat distribution, resulting in consistently formed weld joints. Another advantage of seam welding is its suitability for joining thin materials. Moreover, seam welding is known for the minimal addition of extra material. This is beneficial in applications where a precise weld without excessive material addition is essential. The ability to adjust various welding parameters, such as welding current, welding time, cooling time, and other settings, as described in the provided information, offers precise control over the welding process. This flexibility contributes to optimizing the welding process for the specific requirements of the application.

A seam weld joint consists of a series of small weld joints. The appearance of the weld seam can be compared to a dashed line. The welding process is not continuous; it is briefly interrupted each time. These periods of welding and interruptions can be set with certain parameters. The welding time is the time that welding is actually performed. The cooling time is the period during which the welding is briefly interrupted each time. These times of welding and pauses can be set per welding phase, both for laying the internal weld and for laying the external weld.

According to a further or alternative embodiment, the resistance welding machine includes two or more welding wheels, wherein a copper wire runs over the welding wheels. Firstly, the use of welding wheels in combination with the copper wire allows for precise control over the formation of the weld seam. The copper wire acts as a conductor and plays a crucial role in shaping the weld seam, resulting in improved precision and consistency of the weld. An additional advantage of this configuration is the positive impact on the aesthetic quality of the weld seam. The running of the copper wire over the welding wheels contributes to obtaining a clean and fine weld seam, a feature that is especially important in applications where the visual aspect of the weld joint is relevant. The use of the copper wire also has a practical aspect, as it is cut into short sections after welding. This facilitates the process after welding and prepares it for further processing or application. Additionally, the conductive property of copper contributes to controlled heat transfer during the welding process. This contributes to an even distribution of heat, which is essential for the formation of a consistent weld seam.

According to a further or alternative embodiment, the total welding time for laying the internal weld is at least 2.0 s and at most 20 s, preferably at least 2.2 s and at most 15 s, more preferably at least 2.4 s and at most 10 s, even more preferably at least 2.6 s and at most 9 s, even more preferably at least 2.8 s and at most 8 s, and even more preferably at least 3 s and at most 7 s, and the total welding time for laying the external weld is at least 2.5 s and at most 30 s, preferably at least 3.0 s and at most 25 s, more preferably at least 3.2 s and at most 20 s, even more preferably at least 3.4 s and at most 15 s, even more preferably at least 3.6 s and at most 10 s, and even more preferably at least 3.8 s and at most 9 s.

According to a further or alternative embodiment, a welding time for laying one weld segment of the internal weld is at least 10 ms and at most 200 ms, preferably at least 20 ms and at most 180 ms, more preferably at least 40 ms and at most 160 ms, even more preferably at least 60 ms and at most 140 ms, even more preferably at least 80 ms and at most 120 ms, and even more preferably at least 90 ms and at most 110 ms, and the total welding time for laying one weld segment of the external weld is at least 10 ms and at most 300 ms, preferably at least 20 ms and at most 280 ms, more preferably at least 40 ms and at most 260 ms, even more preferably at least 60 ms and at most 240 ms, even more preferably at least 80 ms and at most 220 ms, even more preferably at least 100 ms and at most 200 ms, even more preferably at least 120 ms and at most 180 ms, even more preferably at least 140 ms and at most 160 ms, and even more preferably at least 145 ms and at most 155 ms.

According to a further or alternative embodiment, the welding time for laying one weld segment depends on the welding phase.

Preferably, laying one weld segment in the first welding phase for laying the internal weld is at least 10 ms and at most 80 ms, preferably at least 12 ms and at most 60 ms, more preferably at least 14 ms and at most 60 ms, even more preferably at least 16 ms and at most 40 ms, even more preferably at least 18 ms and at most 20 ms.

Preferably, laying one weld segment in the second welding phase for laying the internal weld is at least 10 ms and at most 100 ms, preferably at least 12 ms and at most 75 ms, more preferably at least 14 ms and at most 50 ms, even more preferably at least 16 ms and at most 40 ms.

Preferably, laying one weld segment in the third welding phase for laying the internal weld is at least 10 ms and at most 80 ms, preferably at least 12 ms and at most 60 ms, more preferably at least 14 ms and at most 60 ms, even more preferably at least 16 ms and at most 40 ms, even more preferably at least 18 ms and at most 20 ms.

Preferably, laying one weld segment in the first welding phase for laying the external weld is at least 10 ms and at most 100 ms, preferably at least 12 ms and at most 80 ms, more preferably at least 14 ms and at most 60 ms, even more preferably at least 16 ms and at most 40 ms, even more preferably at least 18 ms and at most 20 ms.

Preferably, laying one weld segment in the second welding phase for laying the external weld is at least 10 ms and at most 200 ms, preferably at least 12 ms and at most 150 ms, more preferably at least 14 ms and at most 100 ms, even more preferably at least 16 ms and at most 50 ms.

Preferably, laying one weld segment in the third welding phase for laying the external weld is at least 10 ms and at most 100 ms, preferably at least 12 ms and at most 80 ms, more preferably at least 14 ms and at most 60 ms, even more preferably at least 16 ms and at most 40 ms, even more preferably at least 18 ms and at most 20 ms.

The strategic application of varying welding times during different phases of the welding process, as well as the distinction between welding times for laying the internal weld and external weld, is designed to obtain a very strong weld joint.

The implementation of longer welding times in the middle of the workpiece, i.e., in the second welding phase, of the welding process primarily aims to achieve controlled weld penetration. By extending the duration of the weld in the middle, a more extensive weld segment is obtained, which is beneficial for the overall strength and durability of the weld joint. This results in a more uniform heat input during this crucial phase. An additional advantage of implementing longer welding times in the middle is the reduction of material deformation. By maintaining a more gradual heat distribution, the chance of unwanted deformations due to abrupt temperature changes is minimized. This contributes to accurate geometric integrity of the welded material. Shorter weld segments at the beginning and end of the welding process, on the other hand, can offer specific advantages, such as a controlled startup and shutdown phase. This helps minimize potential irregularities in the weld and promotes a consistent welding result.

According to a further or alternative embodiment, the cooling time of each welding phase for laying the external weld and the internal weld is at least 10 ms and at most 100 ms, preferably at least 15 ms and at most 95 ms, more preferably at least 20 ms and at most 90 ms, even more preferably at least 25 ms and at most 85 ms, even more preferably at least 30 ms and at most 80 ms, even more preferably at least 35 ms and at most 75 ms, even more preferably at least 40 ms and at most 70 ms, even more preferably at least 45 ms and at most 65 ms, even more preferably at least 50 ms and at most 60 ms. The cooling time is a crucial factor for controlling the heat input during the welding process. A controlled cooling period helps prevent overheating and minimizes the chance of material deformation. This adequate cooling time contributes to obtaining the desired material properties. It gives the molten material time to cool and solidify in a controlled manner, which can affect the strength and structure of the weld seam. By carefully regulating the cooling time, one can prevent weld defects, such as cracks or unwanted deformations, that can occur due to insufficient control over the cooling process. This optimal cooling time contributes to an efficient welding process. Excessively long cooling times can reduce overall productivity, while too short times may not allow sufficient cooling, which can be detrimental to weld seam quality. Insufficient cooling time will lead to inadequate cooling of the material, which can result in weaker weld joints and reduced quality of the weld seam. On the other hand, longer cooling times will slow down the welding process and reduce overall productivity. It will also lead to unnecessary waiting times between welding phases.

According to a further or alternative embodiment, a clamping time, or squeeze time, of each welding phase for laying the external weld and the internal weld is at least 30 ms and at most 100 ms, preferably at least 40 ms and at most 90 ms, more preferably at least 50 ms and at most 80 ms, and even more preferably at least 60 ms and at most 70 ms. The clamping time refers to the time programmed in the welding control between the command to close the electrode and the start of the welding time, in other words, it is the time that electrode force is applied before the current begins to flow. In seam welding, wheels are used to apply pressure to the workpiece, i.e., the pipe bend fitting halves, and the clamping time ensures that the wheels stabilize before the welding current is applied. This ensures that the workpieces are well aligned and make contact with each other before the welding current is applied, resulting in a better weld and preventing issues such as surface expulsion, insufficient encapsulation of the weld nugget, and arcing. The clamping time is therefore essential for achieving the correct weld quality and preventing defects. Starting a welding process too early causes weld sparks, which increases the chance of rapid wire breaks and adversely affects the quality of the initial part of the weld. On the other hand, a late start of welding leads to significantly fewer sparks, but this comes at the expense of the quality and strength of the weld. As a result, part of the pipe bend fittings will not be firmly connected to each other. Accurately determining the optimal start time is crucial to ensure both welding performance and the structural integrity of the fitting.

According to a further or alternative embodiment, a welding voltage of each welding phase for laying the external weld and the internal weld is at least 2 V and at most 10 V, preferably at least 3 V and at most 9 V, more preferably at least 4 V and at most 8 V, and even more preferably at least 5 V and at most 7 V. The specified welding voltage is optimized for the pipe bend fitting being welded and for the desired properties of the weld joint. The welding voltage affects the amount of heat generated during the welding process. A well-regulated welding voltage contributes to controlled heat input, which is important to minimize material deformation and maintain the quality of the weld. A higher welding voltage will lead to overheating, which will be harmful to the materials and can reduce the quality of the weld joint. On the other hand, a lower welding voltage will lead to insufficient heating, which can affect the bonding between the materials. The welding voltage is linked to the current flowing through the materials. A well-regulated welding voltage contributes to optimal current distribution over the weld zone, which is crucial for even melting and formation of the weld seam. A welding voltage higher than necessary will also lead to overheating, which can adversely affect the material properties and possibly weaken the weld joint. A lower welding voltage, on the other hand, will result in insufficient heating, leading to weak weld joints and reduced quality. It is therefore crucial to carefully regulate the welding voltage to find an optimal balance between heat management, current distribution, and the desired properties of the weld joint.

According to a further or alternative embodiment, a welding current is at most 30 kA, preferably at most 25 kA, more preferably at most 20 kA, even more preferably at most 15 kA, and even more preferably at most 10 kA. This is an ideal welding current for welding thin sheet material. Preferably, the adjustment of the welding current is adjustable per welding phase, both for the internal and external weld. This adjustment makes it possible to detect defective portions of the weld joints. The welding current will vary slightly between the external and internal weld, but the welding currents are generally not far apart. Adjusting the welding current is essential for obtaining an optimal weld joint. When the welded parts are not sufficiently bonded to each other, the welding current will be increased. Conversely, the welding current can be reduced when the parts are burned through and openings occur in the weld seam. Not properly adjusting this parameter will directly lead to poor airtightness of the final product. Accurately regulating this parameter is of great importance for the quality, particularly the airtightness, and also has a significant impact on the aesthetic aspect of the weld joint.

According to a further or alternative embodiment, a ramp-up time and a ramp-down time of each welding phase for laying the external weld and the internal weld is at most 40 ms, preferably at most 35 ms, more preferably at most 30 ms, even more preferably at most 28 ms, even more preferably at most 26 ms, even more preferably at most 24 ms, even more preferably at most 22 ms, and even more preferably at most 20 ms. The ramp-up time and ramp-down time regulate how quickly the welding current is built up and reduced during each welding phase. This affects the smoothness of the current changes and will help avoid abrupt transitions, which is beneficial for the welding process. A well-controlled ramp-up time and ramp-down time contribute to controlled heat input in the weld area. Too rapid changes in the welding current can lead to unwanted overheating, while too slow changes can affect the efficiency of welding. Too rapid changes in the current can cause sparks. A controlled ramp-up time and ramp-down time help minimize weld sparks, which can positively affect the quality of the weld seam and the lifespan of the electrodes. The specified times are likely chosen to optimize the overall quality of the weld joint. A balanced ramp-up time and ramp-down time contribute to a consistent and strong weld seam. Insufficient ramp-up or ramp-down time will result in abrupt current changes, which can negatively affect weld quality and heat management. Excessive times will slow down the welding process and reduce efficiency. It will also result in unnecessary heat accumulation.

According to a further or alternative embodiment, the welding speed of each welding phase for laying the external weld and the internal weld is at least 50 mm/min and at most 500 mm/min, preferably at least 60 mm/min and at most 450 mm/min, more preferably at least 70 mm/min and at most 400 mm/min, even more preferably at least 80 mm/min and at most 350 mm/min, even more preferably at least 90 mm/min and at most 300 mm/min, even more preferably at least 100 mm/min and at most 250 mm/min, even more preferably at least 110 mm/min and at most 200 mm/min, and even more preferably at least 120 mm/min and at most 150 mm/min. The welding speed is directly linked to the amount of heat generated during the welding process. A controlled welding speed contributes to managing the heat input, which is important to prevent overheating or insufficient heating of the material. This optimal welding speed helps prevent welding defects, such as insufficient bonding between the materials, cracks, or unwanted deformations. The speed will affect the degree of melting and mixing of materials. Higher speeds will lead to less control, lower quality, and will result in insufficient melting and mixing of materials, which can affect the quality of the weld seam, while too low speeds can reduce overall productivity. A lower welding speed will also result in insufficient heat input, which will reduce the bonding between materials and can cause weaker weld joints.

According to a further or alternative embodiment, the two synchronously moving robots are each equipped with a robotic arm, where the robotic arms have a relative deviation of at most 5 mm, preferably at most 4.5 mm, more preferably at most 4.0 mm, even more preferably at most 3.5 mm, even more preferably at most 3.0 mm, even more preferably at most 2.5 mm, even more preferably at most 2.0 mm, even more preferably at most 1.5 mm, even more preferably at most 1.0 mm, and even more preferably at most 0.5 mm, where the relative deviation of the robotic arms measures a distance or an angle between the ends of the robotic arms in real-time, relative to a fixed reference point, where the relative deviation is suitable to indicate the extent to which the robotic arms move synchronously. Specifying a maximum relative deviation between the robotic arms is intended to ensure that both robots can move synchronously and accurately, which is crucial for a successful and high-quality resistance welding process. This optimal relative deviation between the robotic arms contributes to the accuracy of the welding process. To achieve high-quality welding results, it is essential that the robotic arms are well-coordinated to maintain the correct welding positions. The mentioned relative deviation helps prevent errors during the welding process. Welding errors such as misplaced welds or uneven weld seams can occur if the robotic arms do not move synchronously. This precise coordination between the robotic arms contributes to uniform welding results. A larger relative deviation will result in the robotic arms not moving synchronously and leads to an inaccurate welding process, which will reduce the overall quality of the weld joints. Larger deviations can lead to welding errors, such as weld seams that do not align properly or overlaps that reduce the quality of the weld seam.

According to a preferred embodiment, the method includes resistance welding of a pipe bend fitting, wherein two pipe bend fitting halves are welded together to form one pipe bend fitting, wherein each pipe bend fitting half has a shape of the pipe bend fitting that is cut along a longitudinal axis, wherein a profile of the pipe bend fitting is semicircular, wherein each pipe bend fitting half has a long side and a short side, wherein the long side is suitable for forming an outer side of the pipe bend fitting and the short side is suitable for forming an inner side of the pipe bend fitting, the method comprising: positioning two pipe bend fitting halves by means of at least two synchronously moving robots, wherein the short side and the long side of the two pipe bend fitting halves are positioned overlapping, wherein each overlap is at least 0.2 mm and at most 10.0 mm; laying an internal weld along the short side of the two pipe bend fitting halves, wherein the internal weld comprises at least three welding phases, wherein a first welding phase of the internal weld is 20-30% of a total welding time for laying the internal weld, a second welding phase is 50-60% of the total welding time for laying the internal weld, and a third welding phase is 20-30% of the total welding time for laying the internal weld; and laying an external weld along the long side of the two pipe bend fitting halves using the same resistance welding machine, wherein the external weld comprises at least three welding phases, wherein a first welding phase of the external weld is 20-30% of a total welding time for laying the external weld, a second welding phase is 50-60% of the total welding time for laying the external weld, and a third welding phase is 20-30% of the total for laying the external weld, thereby obtaining a pipe bend fitting.

In a second aspect, the invention relates to a device for producing a welded pipe bend fitting. The device comprises a resistance welding machine suitable for welding two pipe bend fitting halves and at least two synchronously moving robots for positioning the two pipe bend fitting halves. This welding machine uses the seam welding principle, a form of resistance welding where electrical energy generates the required heat. An electric current is passed through the two pipe bend fitting halves to be joined, wherein the resistance converts the electrical energy into heat. This heat melts the materials together, and the cyclic melting and solidification form a weld joint.

Preferably, the welding machine includes a central section with a steel frame for supporting a transformer and other functional components, including the feed and discharge system of the welding wire.

Preferably, the welding machine includes a welding section, designed for joining two pipe bend fitting halves into one whole.
an upper, middle, and lower welding section that are pneumatically adjustable for welding different diameters of pipe bend fittings.

The welding section comprises three main parts: an upper welding section, a welding arm, and the lower welding section. By operating various pneumatic cylinders, bends of different diameters can be welded with both the upper and lower welding sections. The middle welding arm provides support to both the upper and lower welding sections.

Preferably, the welding machine includes a welding control section that communicates with the synchronously moving robots. This section includes an adjustable welding control, PLC control, and an interface for communication with a robot system.

According to a further or alternative embodiment, the welding section includes two or more welding wheels, which are provided with a copper wire. This copper wire is used to obtain a fine weld seam. During the welding process, the copper wire runs over the welding wheels, although it is important to note that this wire does not function as a filler material, but is solely intended to achieve an aesthetically high-quality weld. After welding, the copper wire is cut into short sections behind the welding machine.

According to a further or alternative embodiment, each robot is equipped with one or more synchronously movable robot arms suitable for gripping and positioning two pipe bend fitting halves; and one or more sensors for real-time monitoring of the positioning of the two pipe bend fitting halves.

In a third aspect, the invention relates to a use of the method according to the first aspect of the invention or the device according to the second aspect of the invention for manufacturing a pipe bend fitting.

The use of the proposed method and device is particularly advantageous due to the ability to weld ventilation bends with various diameters, preferably ranging from 100 to 250 mm, and angles of approximately 30°, 45°, or 90°. This versatility makes the welding machine suitable for the production of pipe bend fittings that meet specific requirements in terms of diameter and angle, making it suitable for a wide range of ventilation applications. The ability to process different sizes and angles not only improves the efficiency of the production process but also allows for customization, making the welding machine versatile and cost-effective for the production of ventilation bends.

In a fourth aspect, the invention relates to a method for manufacturing a segmented bend.

Preferably, the method for manufacturing a segmented bend includes the steps of supplying an unprocessed metal sheet to a welding machine, roll forming the sheet in the welding machine into a formed metal sheet with the desired diameter, welding the formed sheet into a tubular element, and removing the tubular element from the welding machine using a first robot. This robot then transports the tubular element to a further processing station where the tubular element is provided with a rim at at least one end, resulting in a partially finished tubular element. The first robot then places this partially finished tubular element in an intermediate station for temporary storage. The assembly of at least three such partially finished tubular elements into a segmented bend is done using a second robot and one or more AEMs. The second robot takes a first partially finished tubular element from the intermediate station, wherein the robot rotates the partially finished tubular element under a camera to determine the exact location of a weld seam. This is a crucial step because it is important that each partially finished tubular element is placed in the AEM in the same way. The AEM then forms the final finished segmented bend, while the second robot removes the finished piece from the AEM for further processing. The supply, rolling, welding, and further processing of the tubular elements take place in a streamlined sequence, which increases productivity. The use of a camera by the second robot to determine the exact location of the weld seam ensures consistent quality in the production process. This is essential to ensure that each partially finished tubular element is placed in the AEM in the same way, resulting in uniform end products. By assembling at least three partially finished tubular elements into a segmented bend using robots and AEMs, a high level of flexibility is achieved. This makes it possible to produce different segmented bends with various specifications, tailored to the needs of different applications. The use of robots for transporting tubular elements and assembling the bend, as well as the deployment of AEMs, not only improves efficiency but also minimizes human intervention, which increases safety in the production process.

Preferably, the method starts with supplying an unprocessed metal sheet to a welding machine. Preference is given to using galvanized steel as unprocessed metal sheet. This process is automated, leading to a significant reduction in production time and cost savings on personnel.

According to a further or alternative embodiment, the unprocessed metal sheet has a thickness of at least 0.3 mm and at most 5.0 mm, preferably at least 0.35 and at most 4.0 mm, more preferably at least 0.40 mm and at most 3.0 mm, even more preferably at least 0.45 and at most 2.0 mm, even more preferably at least 0.50 and at most 1.0 mm, and even more preferably at least 0.55 mm and at most 0.6 mm. However, it is possible to allow variations in this thickness, as long as they remain within certain limits to not affect the functionality and integrity of the final product. The method is flexible enough to work with sheets of different thicknesses to meet different product requirements or specifications.

According to a further or alternative embodiment, the method comprises the automatic supply of the unprocessed metal sheet. This automatic supply process begins with picking up the unprocessed metal sheets using a linear actuator and a vacuum system. The linear actuator moves in an X-direction (horizontal) and a Y-direction (vertical) to pick up the sheets at one or more fixed pickup positions, the sheets being lifted by the vacuum system provided on the actuator. This vacuum system works by vacuum-sucking the sheet, which holds the sheet firmly and allows it to be moved easily. After picking up the unprocessed sheet, it is transported to the welding machine using a roller conveyor. The roller conveyor transports the sheet at a controlled and steady speed, ensuring a smooth and efficient transition of the sheet from a pickup position to the welding machine. This minimizes the chance of damage to the sheet during transport and improves the efficiency of the entire process. The feeding of the unprocessed metal sheet into the welding machine is then carried out using a pneumatic arm. This arm moves linearly in the X and Y directions and feeds the sheet into the welding machine. This ensures precise positioning of the sheet in the welding machine, which is essential for obtaining a high-quality weld. This automated method for supplying the unprocessed metal sheet results in faster and more efficient operation of the welding machine, leading to higher productivity. Preferably, a communication system between the welding machine, the linear actuator, and the roller conveyor ensures a streamlined production process. This reduces production times and increases the efficiency of the entire process. Moreover, this method can be easily adapted to different sheet thicknesses and sizes, making it possible to produce a wide range of segmented bends with various dimensions using the same welding machine.

Preferably, the method in a next step includes roll forming the unprocessed metal sheet by the welding machine into a formed metal sheet with a desired diameter. It is important to note that the welding machine can be converted and adjusted to weld different diameters. This offers a high degree of flexibility in production, as the machine can be adjusted to meet different production requirements.

Preferably, the method in a next step includes welding the formed metal sheet by the welding machine into a tubular element.

According to a further or alternative embodiment, the welding machine has a welding speed of at least 3 and at most 12 m/min. This variable speed setting offers a significant advantage in terms of production flexibility. The welding speed can be adjusted to optimize the production flow. This can be useful, for example, when welding different types of metal sheets, where some types may require a slower welding speed for an optimal weld seam. The adjustable welding speed of the welding machine also contributes to high accuracy and quality control in the welding application. By adjusting the welding speed, the operator can accurately monitor the quality of the weld seam and make adjustments if necessary. This leads to the production of high-quality weld seams, which increases the durability and reliability of the final products. This is especially important in applications where the quality of the weld seam directly affects the performance of the final product, such as in the construction of ventilation ducts. In a further embodiment, the welding machine may have a welding speed that varies between 4 m/min and 10 m/min. This speed range offers a good balance between production speed and weld seam quality, making it particularly suitable for the production of standard ventilation ducts. In an even further embodiment, the welding machine may have a welding speed that varies between 5 m/min and 8 m/min. This speed range is ideal for welding thicker metal sheets, where a slower welding speed is needed to achieve an optimal weld seam.

According to a further or alternative embodiment, the welding machine has a welding speed of at least 3 and at most 12 m/min. This variable speed setting offers a significant advantage in terms of production flexibility. The welding speed can be adjusted to optimize the production flow. This can be useful, for example, when welding different types of metal sheets, where some types may require a slower welding speed for an optimal weld seam. The adjustable welding speed of the welding machine also contributes to high accuracy and quality control in the welding application. By adjusting the welding speed, the operator can accurately monitor the quality of the weld seam and make adjustments if necessary. This leads to the production of high-quality weld seams, which increases the durability and reliability of the final products. This is especially important in applications where the quality of the weld seam directly affects the performance of the final product, such as in the construction of ventilation ducts. In a further embodiment, the welding machine may have a welding speed that varies between 4 m/min and 10 m/min. This speed range offers a good balance between production speed and weld seam quality, making it particularly suitable for the production of standard ventilation ducts. In an even further embodiment, the welding machine may have a welding speed that varies between 5 m/min and 8 m/min. This speed range is ideal for welding thicker metal sheets, where a slower welding speed is needed to achieve an optimal weld seam.

Preferably, the method in a next step includes removing the tubular element from the welding machine using a first robot, which first robot transports the tubular element to a further processing station. At this station, the tubular element is provided with a rim at at least one end, resulting in a partially finished tubular element. The first robot will then place the partially finished tubular element in an intermediate station for temporary storage.

Preferably, the method in a next step includes assembling at least three partially finished tubular elements into a segmented bend using a second robot and one or more "Automatic Elbow Machines." The second robot takes a first partially finished tubular element from the intermediate station and rotates the tubular element under a camera to determine the exact location of a weld seam. This is a crucial step, as it is important that the tubular element is placed in the AEM in a uniform manner to ensure consistent product quality. The finished segmented bend is then formed by the AEM. After formation, the segmented bend is removed from the AEM by the second robot for further processing. This includes, for example, applying a label with product information and transporting the finished segmented bend to a conveyor for further distribution. The entire cycle of the method is fully automated, resulting in a streamlined workflow and higher efficiency.

According to a further or alternative embodiment, the method then includes forming the segmented bend using the AEM. This involves, among other things, cutting the partially finished tubular element. This cutting is carried out in a precise manner to ensure that the tubular element obtains the correct shape and size for the next steps in the process. Subsequently, one or two flanges are formed on the partially finished tubular element. This is essential to ensure that the segmented bend has a strong and durable structure. The formation of the flanges can be done in various ways. The final operation of the AEM is folding two flanges of two tubular elements into a segmented bend, where the flanges are folded into a closed seal. This is an important step in the process, as it ensures that the segmented bend has a strong and durable structure. The AEM performs these operations two or more times to obtain the finished segmented bend. This means that the process is repeated until the desired angle of the segmented bend is achieved. This provides a high degree of flexibility in the production process, as it allows for the production of segmented bends with different angles using the same AEM. This method ensures optimal utilization of materials and minimization of waste.

According to a further or alternative embodiment, the method uses at least three AEMs for forming segmented bends with different angles, wherein a first AEM is positioned at an angle of at least 20° for forming segmented bends with an angle of at least 20°, wherein a second AEM is positioned at an angle of at least 40° for forming a segmented bend with an angle of at least 40°, wherein a third AEM is positioned at an angle of at least 80° for forming a segmented bend with an angle of at least 80°. The specific angles of the AEMs can be adjusted within a certain range, for example between 20° and 90°, to provide further flexibility and optimization of the production process. This means that the machine has the ability to form ventilation pipes of different angles, increasing production versatility. This is an important feature because it allows the machine to meet diverse production specifications without losing time on machine changes or settings. This leads to faster production, fewer errors, and ultimately cost savings. This method therefore offers significant advantages over conventional methods. By being able to form segmented bends of different angles within the same machine, production can be streamlined and optimized. This results in higher production speed and a more efficient production process, ultimately leading to cost savings. Moreover, it reduces the chance of errors, as fewer machine changes or settings are needed. This contributes to the reliability and consistency of the final product.

According to a further or alternative embodiment, the second robot uses an electromagnet to remove and transport the finished pieces from the AEM. The use of an electromagnet by the robot has several advantages. Firstly, it increases the efficiency of removing and transporting finished pieces. This is because the electromagnet can be quickly activated and deactivated, allowing the robot to quickly and accurately lift and move the finished pieces. This increased efficiency will lead to a higher production capacity of the system. The use of an electromagnet by the robot also enables safer production. The electromagnet holds the finished pieces securely during transport, reducing the risk of the pieces falling or shifting. This can reduce the risk of damage to the finished pieces or the machine itself. Moreover, it will improve the safety of the workers, as there is less risk of accidents caused by falling or shifting pieces. Moreover, the use of an electromagnet by the robot enables smoother production. The robot can quickly and easily switch between lifting and moving finished pieces, which can shorten the lead time of the production process. This can lead to higher production capacity and more efficient use of production facilities. Finally, the use of an electromagnet by the robot enables more flexible production. The robot can be easily programmed to lift and move finished pieces of different sizes and shapes, allowing the system to be adapted to different production needs. This will make the system more versatile and adaptable, making it suitable for a wide range of production applications.

According to a further embodiment, the force of the electromagnet will be adjusted to lift finished pieces of different weights. This can be achieved, for example, by varying the current flowing through the electromagnet. This can further increase the flexibility of the system, as it can be adapted to finished pieces of different weights.

According to a further or alternative embodiment, the method includes further processing of the segmented bend, which includes applying a label to the finished segmented bend for traceability and identification. This label is provided with product data. The ability to trace each product from the production line to the end user will lead to improved product safety, more efficient recalls, and greater customer satisfaction. The label can contain various types of information, depending on the specific needs of the user. The product data can include information about the production date, the materials used, the place of production, and other relevant information. The label can also contain a unique identification code, such as a barcode or QR code, which can be scanned to access more detailed information about the product online. This can be useful, for example, for quickly locating a specific product. The application of the label can be carried out in various ways. In a preferred embodiment, the label will be applied by a label applicator, which includes a printer and a pneumatic arm. The printer will print the label with the desired product data, and the pneumatic arm will then apply the label to the finished segmented bend. The use of such a label applicator will make the labeling process more efficient and accurate. The ability to apply labels with product information to the manufactured segmented bends leads to faster diagnosis and intervention time in case of any issues in the production line. This can be useful, for example, in situations where a defective product is detected. By scanning the label, it can be quickly determined when and where the product was made, and it may be possible to determine which other products may also be affected. This can lead to faster and more efficient corrective actions, which can contribute to higher overall product quality and customer satisfaction.

According to a further embodiment, the method may also include applying the label to a specific location on the segmented bend, for example, in a place that is easily visible and accessible. This can make it easier to scan the label and read the product information.

According to a further or alternative embodiment, a second robot provides the supply of the AEMs with partially finished segmented bends and the further processing of the finished segmented bends. This second robot is designed to improve production efficiency by optimizing the workflow and shortening production time. The second robot is responsible for supplying the AEMs with partially finished segmented bends. This means that the robot transports the partially finished segmented bends from the temporary storage to the AEMs. This is done in a structured and organized manner to increase production efficiency. The robot is equipped with, for example, a navigation system that allows it to determine the most efficient route to the AEMs and thus minimize the time needed for transporting the segmented bends. In addition to supplying the AEMs, the second robot is also responsible for retrieving the finished segmented bends. Once a segmented bend is fully processed by the AEM, the robot picks it up and transports it to the next step in the production process. This ensures a smooth workflow and minimizes the downtime of the AEMs, further increasing production efficiency. Moreover, the speed at which the robot operates can be adjusted to optimize production efficiency.

According to a further or alternative embodiment, the second robot can, for example, be equipped with a camera system to determine the exact location of the weld seam of the segmented bends. This will be important to ensure that the segmented bends are processed in a consistent and accurate manner. It is clear that the second robot plays an important role in improving production efficiency by supplying the AEMs with partially finished segmented bends and further processing the finished segmented bends. By using a second robot, production speed can be increased, workflow optimized, and production time shortened.

According to a further or alternative embodiment, the thickness of the pieces to be welded, tubular elements, or segmented bends will vary from 0.4 mm to 0.7 mm, and the diameter will vary from 150 mm to 350 mm. This offers greater flexibility and allows for the production of a wider range of products. The length of the pieces can vary from 150 mm to 800 mm, further contributing to the versatility of the method.

According to a further or alternative embodiment, the first robot presents the partially finished tubular element first to a rubber machine before it is provided with a rim or flange. The rubber machine applies a sealing rubber to at least one end of the partially finished tubular element. This process is important for the efficient and accurate production of the final product. The rubber machine is specially designed to apply the sealing rubber accurately and efficiently to the tubular element. The robot presents the partially finished tubular element to the rubber machine, after which the rubber machine applies the sealing rubber to a first end of the partially finished tubular element. The partially finished tubular element with the applied sealing rubber is then transported to a station that forms a rim at the first end of the partially finished tubular element to hold the seal in place. The partially finished tubular element is then presented again to the rubber machine for applying a second sealing rubber to a second end of the partially finished tubular element. This process ensures that both ends of the tubular element are provided with a sealing rubber, ensuring optimal sealing and a more durable final product. After applying the second sealing rubber, a second flange is formed at the second end of the partially finished tubular element. This process ensures that the sealing rubber is held firmly in place, resulting in improved and more efficient production. The partially finished tubular element is then stored in the intermediate station. This intermediate station serves as a temporary storage where the partially finished tubular elements are stored. The intermediate station is specially designed to store the partially finished tubular elements efficiently and safely. This process ensures an optimized workflow and reduces the need for human interaction.

In a fifth aspect, the invention relates to a device for manufacturing a segmented bend.

Preferably, the device includes a supply system for feeding a welding machine. The unique feature of this supply system is that the unprocessed metal sheets can be stored at at least two fixed positions or pickup positions. These sheets can also be stacked on top of each other to a certain height. This can vary from 300 mm to 500 mm, depending on the thickness of the sheets. This flexibility in the storage of the sheets ensures more efficient use of space and allows the device to store a larger quantity of unprocessed sheets, leading to a faster production cycle.

Preferably, the device includes a welding machine suitable for roll forming and welding unprocessed sheets into a tubular element. A particular feature of this machine is that it can be adjusted to weld with diameters ranging from 200 to 315 mm. This adjustability allows for the production of ventilation pipes of different sizes, increasing the versatility and applicability of the device.

Preferably, the device includes two robots for moving the partially finished tubular elements and finished segmented bends between different parts of the device. These robots can also perform additional tasks, such as applying labels. The use of two robots results in a more efficient division of tasks and increases the speed and accuracy of the production cycle.

Preferably, the device includes an intermediate station for temporary storage. This station serves as a kind of temporary storage for the partially finished tubular elements. This ensures an organized workflow and a streamlined production cycle.

Preferably, the device includes one or more AEMs for forming finished segmented bends. These AEMs can form different angles of segmented bends, contributing to the versatility of the device. Depending on the requirements of the production cycle, the AEMs can be adjusted to form segmented bends with angles of, for example, 30, 45, or 90 degrees.

According to a further or alternative embodiment, the device includes a discharge system that includes a linear actuator, a roller conveyor, and a pneumatic arm. The linear actuator is designed to move in both an X and Y direction to pick up unprocessed sheets and place them on the conveyor. The pneumatic arm is designed to feed the unprocessed sheets into the welding machine. The use of a linear actuator in combination with a pneumatic arm offers several advantages. The main advantage is the precision and reliability of material handling. This results in fewer errors in the production process and a higher quality of the final products. The linear actuator can be precisely positioned and can move quickly and efficiently, resulting in faster production time and higher production volume.

According to a further embodiment, the linear actuator can be adjusted to move in a range of X and Y directions. This can vary from a small movement of just a few millimeters to a larger movement of several meters. This offers the ability to pick up and place a wide range of unprocessed sheets on the conveyor, resulting in greater flexibility and adaptability of the device.

According to a further or alternative embodiment, the device includes a station for forming one or more rims on the tubular elements. The station is further equipped with a rubber machine for applying a sealing rubber to partially finished tubular elements. The rubber machine is designed to apply the sealing rubbers accurately and efficiently to the partially finished tubular elements. It can apply different types of sealing rubber, depending on the specific needs of the tubular element. The machine can, for example, apply a sealing rubber specifically designed to provide better airtightness. This can be particularly useful in situations where the tubular elements are used in environments where airtightness is crucial, such as in HVAC systems. The station for forming the rims is designed to efficiently and accurately form one or more rims on the tubular elements. The station can form different types of rims, depending on the specific needs of the tubular element.

According to a further or alternative embodiment, the device includes a label applicator. The label applicator will apply labels to the manufactured tubular elements or segmented bends. These labels can contain a variety of information about the product, such as the production number, production date, materials used, etc. This can help to quickly and specifically identify and address any production issues.

According to a further embodiment, the label applicator includes a printer and a pneumatic arm. The printer is responsible for printing the labels that are applied to the segmented bends. These labels are printed immediately after the production of the segmented bends. The labels contain relevant information about the produced segmented bends, such as the production number, production date, specifications of the segmented bend, and any additional information that may be needed for the identification of the segmented bend. The pneumatic arm of the label applicator is responsible for actually applying the labels to the segmented bends. The arm is designed to apply the labels accurately and efficiently to the segmented bends. The arm can move in different directions and can apply the labels to different positions on the segmented bends. One of the main advantages is that the device enables quick and efficient identification of the produced segmented bends by applying labels. This can be particularly useful in a production environment where large numbers of segmented bends are produced and where quick and efficient identification of the segmented bends can be crucial. Another important advantage of this embodiment is that the label applicator can increase the speed of diagnosis and intervention in case of problems in the production line. By providing relevant product information quickly and efficiently, the label applicator can help to quickly identify and address problems in the production line. This can lead to a reduction in downtime in the production line and can increase overall production efficiency.

According to a further or alternative embodiment, the printer of the label applicator will be designed to be able to print labels in different formats and with different types of information. This can further increase the flexibility of the device and can enable the device to meet different production requirements. The pneumatic arm can also be designed to be able to apply labels to segmented bends of different sizes and shapes, which can further increase the versatility of the device.

A person of ordinary skill in the art will appreciate that the method according to a fourth aspect of the invention can be carried out on a device according to the fifth aspect for manufacturing a segmented bend. Moreover, each feature described above as well as below may relate to any of the aspects, even if the feature is described in conjunction with a specific aspect of the present invention.

In a sixth aspect, the invention relates to a use of a method according to the fourth aspect of the invention, or a device according to the fifth aspect of the invention for manufacturing a segmented bend for use in a ventilation duct. The ability to process different diameters and lengths is crucial in industrial environments, where the requirements for ventilation ducts can vary depending on the specific application. The use of the manufactured segmented bend in ventilation ducts offers significant advantages that enhance the effectiveness and efficiency of ventilation systems. First of all, the curved shape of the segmented bend is designed to efficiently guide the airflow in the ventilation duct. By causing minimal vortices and turbulence, the bend contributes to an even distribution of air, allowing the ventilation system to function optimally. An additional advantage lies in the adaptability of the tubular elements. The ability to produce tubular elements and segmented bends with different diameters, as facilitated by the adjustable welding machine, makes it easier to adapt ventilation ducts to specific space requirements. This is particularly beneficial in situations where the available space is limited. The versatility of the segmented bends contributes to their applicability in different environments, including homes, offices, and industrial facilities. This allows ventilation systems to be customized for various applications, enabling broad usability. A crucial aspect is the airtightness achieved by the precise welding and forming of the segmented bends, along with the application of sealing rubbers according to the described device. This feature minimizes unwanted air loss and increases the energy efficiency of the ventilation system.

### EXAMPLES

The present invention will now be further explained by means of the following examples. The present invention is in no way limited to the given examples.

Example 1: welding two pipe bend fitting halves to form one pipe bend fitting.

Example 1 concerns the process of joining two pipe bend fitting halves into one pipe bend fitting by means of resistance welding on a seam welding machine. This specific welding machine is equipped with two welding wheels, over which a copper wire runs. The seam welding results in a weld seam that resembles a dotted line, consisting of consecutive small weld joints. The welding itself is not continuous but is periodically interrupted. These periods of welding and interruptions are adjustable based on specific parameters, which are shown in tables 1 and 2, including the welding time (the time of effective welding) and the cooling time (the period of interruption). These settings can be adjusted separately for both laying the internal weld and laying the external weld.

The method begins with positioning two pipe bend fitting halves, for which two synchronously moving robots are used. The two pipe bend fitting halves are positioned such that they overlap each other, with a maximum overlap of 2 mm.

Subsequently, an internal weld is laid along the short side of the pipe bend fittings. This internal weld consists of at least three welding phases, with a total welding time of approximately 10 seconds. Detailed welding parameters, such as the duration of each welding phase, time for laying one weld segment, cooling time, clamping time, welding voltage, welding current, ramp-up time, and ramp-down time, are recorded in Table 1.

**Table 1: Welding parameters for laying the internal weld.**

| **Internal weld** | First welding phase | Second welding phase | Third welding phase |
|---|---|---|---|
| Duration (%) of Total Welding Time (s) | 22.5 | 55 | 22.5 |
| Time (ms) for laying one weld segment | 10 | 30 | 10 |
| Cooling time (ms) | 15 | 30 | 15 |
| Clamping time (ms) | 35 | 70 | 35 |
| Welding voltage (V) | 4 | 5 | 4 |
| Welding current (kA) | 5 | 6 | 5 |
| Ramp-up time (ms) | 10 | 10 | 10 |
| Ramp-down time (ms) | 10 | 10 | 10 |

Finally, an external weld is laid along the long side of the pipe bend fittings using the same resistance welding machine. This external weld also consists of at least three welding phases, wherein a pipe bend fitting is formed. The total welding time for laying the external weld is approximately 15 seconds. The corresponding welding parameters are included in Table 2.

**Table 2: Welding parameters for laying the external weld.**

| **External weld** | First welding phase | Second welding phase | Third welding phase |
|---|---|---|---|
| Duration (%) of Total Welding Time (s) | 25 | 50 | 25 |
| Time (ms) for laying one weld segment | 15 | 40 | 20 |
| Cooling time (ms) | 20 | 35 | 30 |
| Clamping time (ms) | 30 | 80 | 40 |
| Welding voltage (V) | 4 | 5 | 4 |
| Welding current (kA) | 6 | 7 | 6 |
| Ramp-up time (ms) | 15 | 15 | 15 |
| Ramp-down time (ms) | 15 | 15 | 15 |

The inventors have found that the result of this welding process is remarkably solid. The resulting weld seam is not only strong but also reliable and durable. The pipe bend fitting that emerges from this process demonstrates a solid and effective welding technique. The inventors have developed a method that not only meets the standards but even exceeds them, resulting in a robust weld seam that fulfills its function convincingly.

This welding method not only delivers a strong weld seam but also results in a pipe bend fitting that is ideal for specific applications, such as ventilation ducts. The uniform and durable weld ensures a reliable connection that withstands the conditions often associated with ventilation systems.

In a ventilation duct, reliability is essential, and the resulting weld seam provides just that. The pipe bend fitting, formed using this welding technique, guarantees seamless operation in ventilation systems, where the strong weld ensures long-lasting performance without compromising structural integrity.

The present invention is in no way limited to the forms described in the examples and/or shown in the figures. On the contrary, methods according to the present invention can be realized in many different ways without departing from the scope of the invention.

Example 2. A ventilation duct is produced using the following process steps: an unprocessed metal sheet of 0.5 mm thickness and 200 mm length is supplied to a welding machine. The welding machine roll-forms the unprocessed sheet into a shaped piece and then welds it into a tubular element with a diameter of 250 mm. A first robot removes the tubular element and transports it to a processing station, where one end of the tubular element is provided with a sealing rubber and a rim.

The partially finished tubular element is then placed in an intermediate station for temporary storage.

Subsequently, three partially finished tubular elements are taken from the intermediate station and assembled into a segmented bend using a second robot and three AEMs. Each AEM is strategically positioned at a specific angle, where a first AEM forms an angle of 20°, the second AEM an angle of 40°, and the third AEM an angle of 60°, thus obtaining a segmented bend. Finally, the segmented bend is removed from the AEM.

Immediately after the production of this segmented bend, a label is generated with essential information such as the production number, production date, and specifications of the segmented bend. This label is then applied to the segmented bend.

The inventors have determined that this segmented bend excels due to several crucial properties. First, the meticulous production process, where the segmented bend is formed by assembling partially finished tubular elements at specific angles using AEMs, ensures unparalleled precision and consistency. The strategic positioning of the AEMs at different angles results in segmented bends with various specifications, making the bend versatile for different applications. Moreover, the labeling process with crucial product information contributes to traceability, identification, and quality control of each produced segmented bend. The uniform quality, flexibility in specifications, and the ability for efficient traceability make this segmented bend a high-quality product that meets various industrial needs.

The present invention is in no way limited to the embodiments described in the examples. On the contrary, methods according to the present invention can be realized in many different ways without departing from the scope of the invention.

In another preferred embodiment of the method for manufacturing a segmented bend, it includes supplying an unprocessed metal sheet to a welding machine, where the unprocessed sheet is automatically fed from a stock to the welding machine using a linear actuator and a vacuum system to pick up and transport the sheet. The unprocessed metal sheet is then roll-formed by the welding machine into a shaped metal sheet with the desired diameter, making it suitable for further processing. The shaped metal sheet is then welded by the welding machine into a tubular element, where the sheet is joined into a tube through a controlled welding process, with a welding speed of at least 3 and at most 12 meters per minute. The tubular element is removed from the welding machine by a first robot, which transports the tubular element to a further processing station where at least one end of the element is provided with a rim, resulting in a partially finished tubular element. This partially finished tubular element is then temporarily stored in an intermediate station by the first robot. The assembly of at least three partially finished tubular elements into a segmented bend is carried out using a second robot and one or more Automatic End-forming Machines (AEMs). The second robot takes a partially finished tubular element from the intermediate station, rotates the element under a camera to determine the exact position of the weld seam, and then places the element in the AEM based on the correct position. The tubular elements are then formed by the AEM into the finished segmented bend. After the segmented bend is formed, the second robot removes the segmented bend from the AEM for further processing. The method uses at least three AEMs for forming segmented bends with different angles, where a first AEM is positioned at an angle of at least 20° for forming segmented bends with an angle of at least 20°, a second AEM at an angle of at least 40° for an angle of at least 40°, and a third AEM at an angle of at least 80° for an angle of at least 80°. A feature of this other preferred embodiment is that the second robot uses an electromagnet to remove and transport the finished pieces from the AEM. Furthermore, the method includes forming the segmented bend by the AEM, where the cutting of the partially finished tubular element, the forming of two flanges on the tubular element, fitting the flanges into each other, and folding the flanges into a closed seal are performed. These actions are repeated by the AEM, depending on the desired angle of the segmented bend. The preference is for galvanized steel as the unprocessed metal sheet, which provides better protection against corrosion and a longer lifespan of the final product. After the segmented bend is formed, a label is applied to the finished segmented bend for traceability and identification. This label contains product data and is applied by the second robot during the further processing of the segmented bend. The second robot also ensures the supply of the AEMs with partially finished segmented bends, the retrieval of the finished segmented bends, and their further processing, such as labeling and transporting to the next production steps. The supply of the unprocessed metal sheet includes automatically picking up the sheets using a linear actuator and a vacuum system. The sheets are then transported to the welding machine via a roller conveyor and fed into the welding machine using a pneumatic arm. The unprocessed metal sheet has a thickness of at least 0.3 mm and at most 5 mm, ensuring a good balance between strength and workability. The first robot presents the partially finished tubular element to a rubber machine before it is provided with a rim. This rubber machine applies a sealing rubber to at least one end of the tubular element. The element is then transported to a station where a rim is formed to hold the seal, after which a second sealing rubber is applied to the other end. Finally, the partially finished tubular element is stored in the intermediate station for further processing.

Other preferred embodiments of the method include the use of a welding machine with a welding speed of at least 3 and at most 12 m/min, where the first robot first presents the partially finished tubular element to a rubber machine before it is provided with the rim. The rubber machine applies a sealing rubber to at least one end of the partially finished tubular element, and the method also includes presenting the piece to a rubber machine, applying the sealing rubber, transporting to a station that forms a rim, and then applying a second sealing rubber to the other end of the tubular element. Another preferred embodiment concerns a device for manufacturing a segmented bend, comprising a supply system for feeding a welding machine where the unprocessed metal sheets can be stocked at fixed positions, two robots for moving tubular elements, an intermediate station for temporary storage, and multiple AEMs for forming finished segmented bends at different angles. The device also includes a label applicator for providing labels on the finished segmented bends for traceability and identification. Finally, another preferred embodiment includes the use of the described method and device for manufacturing a segmented bend for use in a ventilation duct.

## Claims

1. Method for resistance welding of a pipe bend fitting, wherein two pipe bend fitting halves are welded together to form one pipe bend fitting, wherein each pipe bend fitting half has a shape of the pipe bend fitting that is cut along a longitudinal axis, wherein a profile of the pipe bend fitting is semicircular, wherein each pipe bend fitting half has a long side and a short side, wherein the long side is suitable for forming an outer side of the pipe bend fitting and the short side is suitable for forming an inner side of the pipe bend fitting, the method comprising:
- the positioning of two pipe bend fitting halves by means of at least two synchronously moving robots, wherein the short side and the long side of the two pipe bend fitting halves are positioned overlapping, wherein each overlap is at least 0.2 mm and at most 10.0 mm;
- the laying of an internal weld along the short side of the two pipe bend fitting halves, wherein the internal weld comprises at least three welding phases, wherein a first welding phase of the internal weld is 20-30% of a total welding time for laying the internal weld, a second welding phase is 50-60% of the total welding time for laying the internal weld, and a third welding phase is 20-30% of the total welding time for laying the internal weld; and
- the laying of an external weld along the long side of the two pipe bend fitting halves using the same resistance welding machine, wherein the external weld comprises at least three welding phases, wherein a first welding phase of the external weld is 20-30% of a total welding time for laying the external weld, a second welding phase is 50-60% of the total welding time for laying the external weld, and a third welding phase is 20-30% of the total for laying the external weld, thereby obtaining a pipe bend fitting.

2. The method according to claim 1, **characterized in that** the resistance welding takes place on a resistance welding machine, preferably the welding machine is of the seam welding type.

3. The method according to claim 1 or 2, **characterized in that** the resistance welding machine comprises two or more welding wheels, wherein a copper wire runs over the welding wheels.

4. The method according to any of the preceding claims 1 to 3, **characterized in that** a clamping time of each welding phase for laying the external weld and the internal weld is at least 30 ms and at most 100 ms.

5. The method according to any of the preceding claims 1 to 4, **characterized in that** a welding voltage of each welding phase for laying the external weld and the internal weld is at least 2 V and at most 10 V.

6. The method according to any of the preceding claims 1 to 5, **characterized in that** a ramp-up time and a ramp-down time of each welding phase for laying the external weld and the internal weld is at most 40 ms.

7. The method according to any of the preceding claims 1 to 6, **characterized in that** the total welding time for laying the internal weld is at least 2.0 s and at most 20 s and the total welding time for laying the external weld is at least 2.5 s and at most 30 s.

8. The method according to any of the preceding claims 1 to 7, **characterized in that** a cooling time of each welding phase for laying the external weld and the internal weld is at least 10 ms and at most 100 ms.

9. The method according to any of the preceding claims 1 to 8, **characterized in that** a welding speed of each welding phase for laying the external weld and the internal weld is at least 50 mm/min and at most 500 mm/min.

10. The method according to any of the preceding claims 1 to 9, **characterized in that** the two synchronously moving robots are each provided with a robotic arm, wherein the robotic arms have a relative deviation of at most 5 mm, where the relative deviation of the robotic arms measures a distance or an angle between the ends of the robotic arms in real-time, relative to a fixed reference point, where the relative deviation is suitable to indicate the extent to which the robotic arms move synchronously.

11. A device for producing a welded pipe bend fitting, comprising a resistance welding machine suitable for welding two pipe bend fitting halves and at least two synchronously moving robots for positioning the two pipe bend fitting halves, the welding machine comprising:
- a central section with a steel frame for supporting a transformer;
- a welding section for welding two pipe bend fitting halves into one pipe bend fitting;
- a welding control section to communicate with the synchronously moving robots.

12. The device according to claim 11, **characterized in that** the welding section comprises an upper, middle, and lower welding section that are pneumatically adjustable for welding different diameters of pipe bend fittings.

13. Method for manufacturing a segmented bend, comprising:
- feeding an unprocessed metal sheet to a welding machine;
- roll forming the unprocessed metal sheet by the welding machine into a formed metal sheet with a desired diameter;
- welding the formed metal sheet by the welding machine into a tubular element;
- removing the tubular element from the welding machine by means of a first robot, which first robot transports the tubular element to a further processing station where the tubular element is provided with a rim at at least one end, thereby obtaining a partially finished tubular element, after which the first robot will place the partially finished tubular element in an intermediate station for temporary storage of the partially finished tubular element;
- the assembly of at least three partially finished tubular elements into a segmented bend using a second robot and one or more Automatic End-forming Machines (AEMs), comprising:
i. taking a first partially finished tubular element from the intermediate station by a second robot, wherein the second robot rotates the partially finished tubular element under a camera to determine the exact position of a weld seam and places the partially finished tubular element in the AEM in the same manner;
ii. forming the tubular elements into the finished segmented bend by the AEM;
iii. removing the segmented bend from the AEM by the second robot for further processing of the finished segmented bend
iv. **characterized in that** the method uses at least three AEMs for forming segmented bends with different angles, wherein a first AEM is positioned at an angle of at least 20° for forming segmented bends with an angle of at least 20°, wherein a second AEM is positioned at an angle of at least 40° for forming a segmented bend with an angle of at least 40°, wherein a third AEM is positioned at an angle of at least 80° for forming a segmented bend with an angle of at least 80°;
v. **characterized in that the** second robot uses an electromagnet to remove and transport the finished pieces from the AEM.

14. The device according to any of the preceding claims 1 to 13, **characterized in that** each robot is provided with one or more synchronously movable robotic arms suitable for gripping and positioning two pipe bend fitting halves; and one or more sensors for real-time monitoring of the positioning of the two pipe bend fitting halves.

15. The use of the method according to any of the preceding claims 1 to 10 or the device according to any of the preceding claims 11 to 14 for manufacturing a pipe bend fitting.
